# EUROPÄISCHE PATENTSCHRIFT

(11) **EP 0 611 956 B1**
(45) Veröffentlichungstag und Bekanntmachung des Hinweises auf die Patenterteilung: **02.01.1997**
(21) Anmeldenummer: 93116841.3
(22) Anmeldetag: 19.10.1993
(51) Int. Cl.: G01G 19/00, G01G 19/52, G01N 5/04

(54) **Trockner mit einer Präzisionswaage**
Dryer with a precision balance
Séchoir avec une balance de précision

(30) Priorität: 16.02.1993 CH 472/93
(43) Veröffentlichungstag der Anmeldung: 24.08.1994
(73) Patentinhaber: Mettler-Toledo AG, CH-8606 Greifensee (CH)
(72) Erfinder: Philipp, Florian, CH-8614 Bertschikon (CH); Hautle, Alfred, CH-8606 Greifensee (CH); Nüsch, Reto, CH-8606 Greifensee (CH); Straub, Beat, CH-8610 Uster (CH)

(56) Entgegenhaltungen:
- EP-A- 0 145 665
- DE-A- 3 814 959
- DE-U- 9 010 960
- FR-A- 2 626 366
- US-A- 3 032 132

## Beschreibung

Gegenstand der Erfindung ist ein Trockner mit einem Gehäuse, einer eingebauten Präzisionswaage zur Bestimmung des Feuchtigkeitsgehaltes eines zu wägenden Gutes, einer Waagschale zur Aufnahme des Wägegutes, welche mit dem Lastaufnehmer der Messzelle der Waage verbunden ist, einer über der Waagschale angeordneten Wärmequelle zum Erwärmen des Wägegutes, wobei sich die Waagschale beim Trocknen innerhalb des Gehäuses befindet, und mit Mitteln zum Zugänglichmachen der Waagschale für das Beschicken und Einwägen des Wägegutes.

Zur Bestimmung des Feuchtigkeitsgehaltes eines Produktes wird dieses getrocknet und das Gewicht vor (gegebenenfalls auch während) und nach dem Trocknungsvorgang gemessen. Vorzugsweise erfolgt dabei der Trocknungsprozess direkt auf einer Waage, um Verluste von zu trocknendem Material beim Manipulieren zu vermeiden und um die Bestimmung raschmöglichst durchführen zu können.

Aus der DE-A1-3814959 ist ein Feuchtigkeitsmessgerät bekannt, bei dem mehrere Proben auf einem Drehteller in einem Ofen aufgelegt sind und zur Wägung auf eine Waage einzeln abgesetzt werden können. Bei einem solchen Gerät muss das Einwägen auf einer zweiten Waage vor dem Aufsetzen der Proben auf den Teller und vor dem Einführen in den Ofen erfolgen. Zudem muss jede Probe eine Kennzeichnung aufweisen, um Verwechslungen mit anderen Proben zu vermeiden.

Da die Arbeitsflächen in der Küche und in Laboratorien meist sehr schmal bemessen sind, so dass die permanente Anwesenheit einer nur gelegentlich benutzten Waage und die damit notwendigerweise belegte Fläche für andere Verrichtungen fehlt, wird in der EP-A-0145665 eine während des Nichtgebrauchs unter die Arbeitsfläche eines Arbeitstisches einschiebbare, in einer herkömmlichen Normschublade eingesetzte Haushalt- oder Laborwaage vorgeschlagen. Durch diese Waagenanordnung kann die Arbeitsfläche sogar während des Wägevorganges freigehalten werden, weil die Wägung in der ausgefahrenen Schublade vor der Arbeitsfläche erfolgt. Gleichzeitig wird erreicht, dass die Waage nicht vor jedem Gebrauch neu auf der Aufstellfläche ausnivelliert werden muss. Es wird auch eine Verschmutzung während des Nichtgebrauchs verhindert. Die bekannte Waage ist in der Schublade vorzugsweise elastisch aufgehängt, damit Stösse beim Verschieben von der Waageneinheit ferngehalten werden können. Damit die Waage in eingeschobenem Zustand sicher ausgeschaltet ist, werden zudem Mittel vorgeschlagen, welche die Stromzufuhr nur in vollständig ausgezogener Stellung erlauben.

Die Verwendung dieser bekannten Waagenanordnung für einen Wägevorgang mit einer Präzisionswaage in einem gegenüber der Umgebung abgeschlossenen Raum unter Ausschluss von Luftströmungen ist folglich nicht gegeben. Einerseits liegt die Oberfläche der Waagschale unmittelbar unter der Arbeitsfläche, so dass über der Waagschale kein geschlossener Raum aufgebaut werden kann und anderseits ist die Waage, sobald sie ein Stück weit eingeschoben ist, ausser Betrieb. Zudem werden die Bedienungs- und Anzeigeinstrumente zusammen mit der Waage unter die Arbeitsfläche geschoben, damit auch diese keine Arbeitsfläche bedekken und geschützt sind.

Es ist auch bereits ein Trockner (METTLER LP 16 "Infrarot Trockner") bekannt, in welchem eine Präzisionswaage eingebaut ist, deren Waagschale sich in einer Ofen- oder Trockenkammer befindet. Die Ofenkammer weist für die Beschickung der Waagschale mit dem Wägegut einen Deckel auf, in welchem zudem das Heizelement untergebracht ist. Als Heizelement dient beim bekannten Trockenofen ein Infrarotstrahler. Dieser Trockenofen erfüllt die an ihn gestellten Anforderungen bezüglich Wägegenauigkeit, da das Einwägen und Wägen des feuchten Wägegutes und das Wägen des getrockneten Wägegutes direkt auf der Waage erfolgen kann. Es ist allerdings nicht sehr einfach, die innerhalb des Gehäuses liegende und nur durch die vom geöffneten Deckel freigegebene Öffnung zugängliche Waagschale zu beschicken und allenfalls zuviel aufgelegtes Wägegut beim Einwägen wieder zu entnehmen.

Die Aufgabe der vorliegenden Erfindung besteht nun darin den eingangs angeführten Trockner so auszubilden, daß dessen Waagschale für die Beschickung und das Einwägen des zu trocknenden Gutes vor der Wägung sowie für die Entnahme des Wägegutes leicht zugänglich ist.

Diese Aufgabe wird dadurch gelöst, dass die Waagschale für die Beschickung und das Einwägen des Wägegutes aus dem Gehäuse ausfahrbar ausgebildet ist.

Der erfindungsgemässe Trockner ermöglicht es der Bedienungsperson, die Waagschale sowohl von vorne als auch von der Seite zu beschicken, da diese vollständig aus dem Gehäuse ausfahrbar gelagert ist. Die mit der Waagschale auch in ausgefahrenem Zustand verbundene Messzelle erlaubt es, während des Beschickungs- und Trocknungsvorganges Wägungen durchzuführen. Die freie Zugänglichkeit der Waagschale von drei Seiten ermöglicht es auch Linkshändern, ohne Umstände zu arbeiten. Die ausgefahrene Waagschale liegt auf einer geringen Höhe über der Aufstellfläche des Trockenofens, so dass das Einwägen mit auf der Abstellfläche abgestützter Hand erfolgen kann.
Ein im Gehäuse über der Waagschale eingesetztes Schauglas erlaubt die Beobachtung des Wägegutes während des Trocknungsvorganges. Das Wägegut wird dabei durch eine ringförmig ausgebildete Halogenlampe erleuchtet.

Anhand illustrierter Ausführungsbeispiele wird die Erfindung näher erläutert. Es zeigen:
- Figur 1: eine perspektivische Darstellung eines Trocknungsofens mit in gebrochenen Linien angedeuteter ausgefahrener Waagschale,
- Figur 2: eine Aufsicht auf den Trockenofen, ausgefahrene Stellung der Waage in gebrochenen Linien dargestellt,
- Figur 3: einen Querschnitt durch den Trockner längs Linie III- III in Figur 2, ausgefahrene Stellung in strichpunktierten Linien angedeutet,
- Figur 4: einen Querschnitt durch den Trockner längs Linie IV- IV in Figur 2,
- Figur 5: einen Querschnitt durch den Trockner längs Linie V-V in Figur 2,
- Figur 6: eine schematische Darstellung einer weiteren Ausgestaltung der Erfindung mit einer Nürnbergerschere als Längsführung,
- Figur 7: eine schematische Darstellung einer weiteren Ausgestaltung der Erfindung mit einer um eine vertikale Schwenkachse schwenkbaren Waageneinheit.

In einem aus zwei Teilen 1 und 3 zusammengesetzten Gehäuse 5 eines Trocknungsgerätes 7 sind im Teil 1 eine Waage oder Waageneinheit 9 und eine Wärmequelle 11 über der Waageschale 13 der Waage 9 angeordnet. An den Teil 1 schliesst seitlich der Teil 3 an, welcher die Bedienungs- und Displayelemente enthält. Im Teil 3 können auch noch elektronische Komponenten für die Waage 9 untergebracht sein. Der vordere Abschnitt des Oberteiles des Teiles 1 ist als Deckel 19 ausgebildet und kann um eine horizontale Achse A nach oben geschwenkt werden. Im Deckel 19 kann ein Schauglas 21 eingesetzt sein, das einen Einblick auf die eingeschobene Waagschale 13 mit dem daraufliegenden Wägegut 23 erlaubt. Das Schauglas 21 liegt konzentrisch zur Wärmequelle 11, im vorliegenden Beispiel eine im wesentlichen ringförmige Halogenlampe, durch welche der zwischen der Waagschale 13 und dem Deckel 19 liegende Trockenraum 25 erwärmt und erleuchtet wird. An der Oberseite des Teiles 3 sind ein Tastaturfeld 27 und ein Anzeigefeld 29 angeordnet, über welche die Funktionen der Waage 13 und des Trocknungsofens bedient werden können. Die Ausgestaltung der Anzeige- und Bedienungselemente wird hier nicht näher erläutert, da sie nicht Gegenstand der Erfindung sind. Das Trocknungsgerät 7 ist auf Füssen 15 exakt horizontal nivellierbar abgestützt.

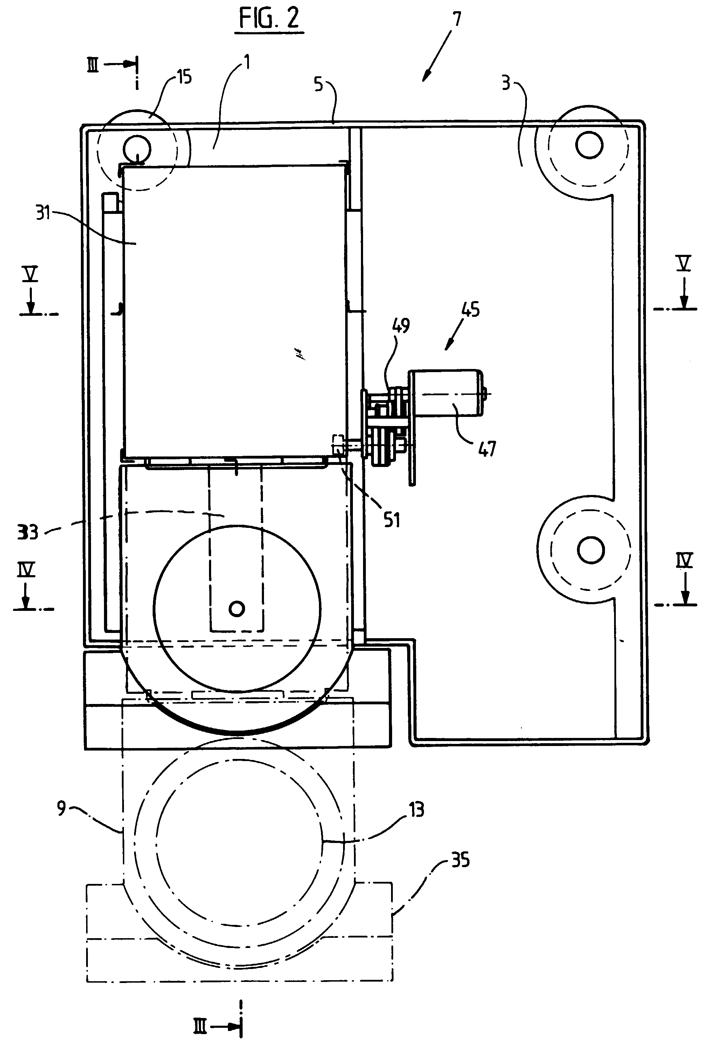

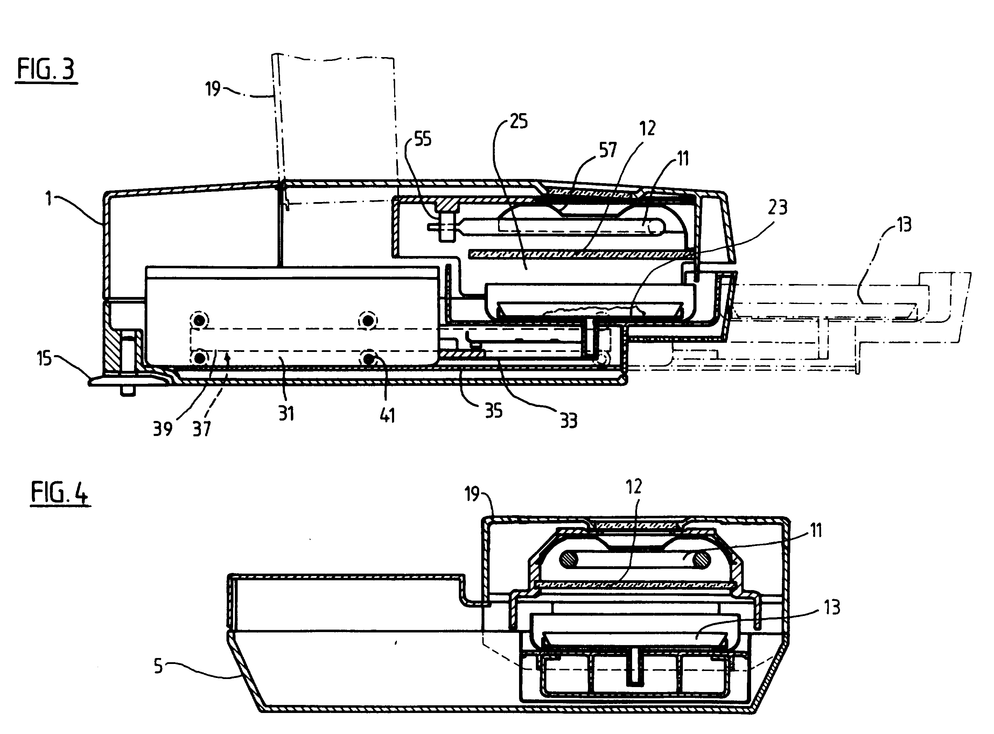

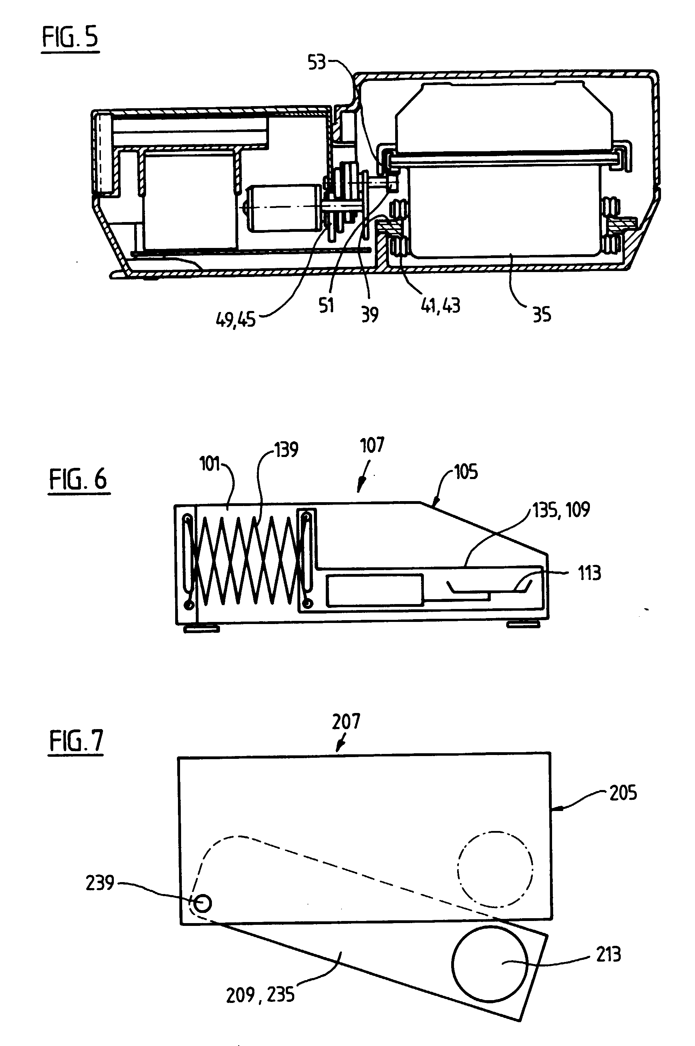

Die Waage 9 mit der Messzelle 31 und dem Lastaufnehmer 33, der die Waagschale 13 trägt, ist in einem schubladenartigen Auszug 35 eingesetzt und auf einer Linearführung 37, in den Figuren 2 bis 5 ein Paar am Gehäuse 5 befestigte Führungsschienen 39, die mit am Auszug 35 gelagerten Rollen 41 zusammenwirken, fahrbar angeordnet. Die Rollen 41 sind vorzugsweise paarweise übereinanderliegend befestigt, so dass eine im wesentlichen spielfreie Abstützung von unten als auch von oben erfolgt. Die seitliche Führung des Auszuges 35 kann durch Laufrillen 43 in den Mantelflächen der Rollen 41 gewährleistet werden, wenn die Führungsschienen 39 entsprechend geformte, in die Laufrillen 43 einzugreifen bestimmte rippenartige Laufflächen aufweisen. Der Auszug 35 kann entweder von Hand, d.h. manuell heraus- und in das Gehäuse 5 hineingeschoben werden oder durch einen motorischen Antrieb 45 (Figuren 2/5). Der Antrieb 45 weist einen Elektromotor 47 mit einem Getriebe 49 auf, auf dessen Abtriebsseite ein Ritzel 51 aufgesetzt ist, das an einer am Auszug 35 befestigten Zahnstange 53 kämmt. Die Zahnstange 53 kann Teil des wannenförmigen Auszuges 35 sein.

Alternativ können anstelle von Führungsschienen auch Nürnberger-Scheren 139 treten, deren hintere Enden unten fest und oben vertikal verschiebbar am Teil 101 des Gehäuses 105 befestigt sind und deren vordere Enden die Waage 109 oder den die Waage 109 aufnehmenden Auszug 135 tragen (Figur 6).
Eine weitere Alternative zu einer Linearführung ist eine Schwenklagerung des Auszuges 235. Dazu wird dieser an einer vertikalen Welle 239 angelenkt und kann auf diese Weise seitlich soweit ausgeschwenkt werden, bis die Waagschale 213 vollständig ausserhalb des Gehäuses 205 zu liegen kommt (Figur 7).
In den Ausführungen der Erfindung gemäss den Figuren 6 und 7 können ebenfalls elektrische Antriebe für das Ausfahren bzw. Ausschwenken des Auszuges 135 bzw. 235 verwendet werden (Keine Abb.).

Im schwenkbar ausgestalteten Deckel 19 ist auf einem isolierten Sockel 55 die Wärmequelle 11, z.B. die ringförmige Halogenlampe, eingesetzt. Über der Wärmequelle 11 liegt ein Reflektor 57, der die Wärmestrahlung auf die Waagschale 13 reflektiert und fokussiert, sowie eine übermässige Erwärmung der Oberfläche des Deckels 19 verhindert. Der Reflektor 57 ist ringförmig ausgebildet, wenn im Dekkel 19 ein Schauglas 21 eingesetzt ist. Beim Arbeiten mit dem Trokkengerät 7 bleibt der Deckel 19 stets geschlossen. Er wird nur zur Reinigung des Reflektors 57 oder zum Ersetzen der Wärmequelle 11 geöffnet.
Unterhalb der Wärmequelle 11 kann ein Abdeckglas 12 am Deckel 19 befestigt sein, welches die Halogenlampe vor Berührung durch das Bedienungspersonal sowie vor einem Kontakt mit dem Wägegut 23 schützt.

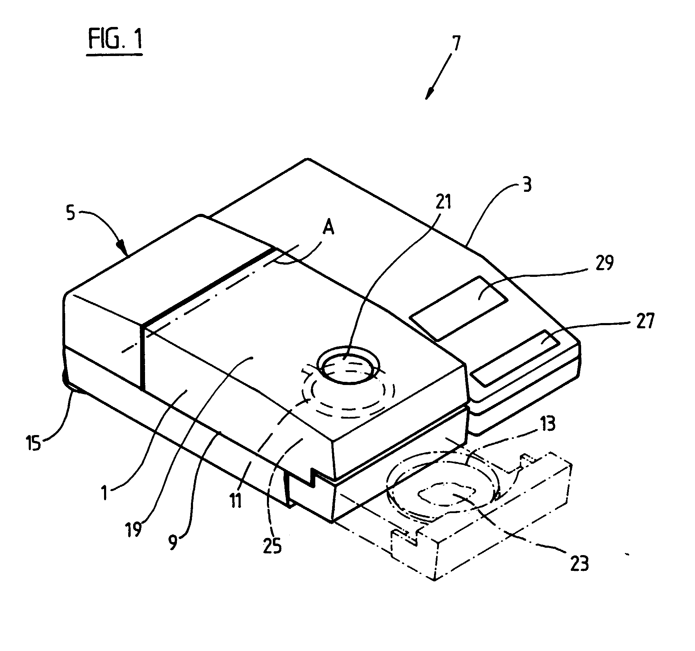

Im folgenden wird die Funktionsweise des Trockners 7 am Ausführungsbeispiel gemäss den Figuren 1 bis 5 näher erläutert.
Manuell oder auf Tastendruck wird der Auszug 35 ausgefahren, bis die Waagschale 13 vollständig ausserhalb des Gehäuses 5 liegt. Sie ist nun nicht nur von vorne, sondern auch von beiden Seiten frei zugänglich. Die Beschickung und das Einwägen des Wägegutes 23 kann nun auf bequeme Weise erfolgen, da die Waage 9 auch in ausgefahrener Stellung stets wägebereit und tarierbar ist. Das Tarieren erfolgt vorzugsweise vor dem Einwägen des Wägegutes. Dank der präzisen Führung des Auszuges 35 können daraufhin die Wägungen inner- und ausserhalb des Gehäuses 5 ohne Nachtarierung mit der erforderlichen Genauigkeit durchgeführt werden.
Im weiteren kann das Abdeckglas 12 als Filter dienen, um beispielsweise UV-empfindliche Wägegüter gegen schädliche Auswirkungen dieser Strahlung zu schützen.

Sobald das Wägegut 23 eingewogen ist, wird der Auszug 35 in das Gehäuse 5 zurückgeführt, und es kann durch Einschalten der Wärmequelle 11 der Trocknungsvorgang bzw. die Entfeuchtung des Wägegutes 23 einsetzen. Dabei kann der zeitliche Verlauf der Entfeuchtung dauernd auf dem Anzeigefeld 29 mitverfolgt oder durch einen Drucker (nicht dargestellt) aufgezeichnet werden. Das Einfahren der Wägeeinheit 9 kann z.B. durch Drücken einer "Start"-Taste erfolgen. Nach Abschluss der Entfeuchtung wird der Auszug 35 für die Entnahme des getrockneten Wägegutes 23 wieder aus dem Gehäuse 5 ausgefahren werden. Ein Verschütten des in vielen Fällen nun staubförmigen Wägegutes 23 innerhalb des Trockenofens 7 wird sicher vermieden.

Die Funktionsweise des Trockners 107 gemäss Figur 6 ist analog derjenigen des Trockners in den Figuren 1 bis 5. Der Trockner 207 gemäss Figur 7 unterscheidet sich insofern in seiner Funktion von denjenigen in den vorangegangenen Figuren dadurch, dass nicht eine lineare Ausfahrbewegung, sondern eine Schwenkbewegung um die Achse 239 erfolgt, so dass die Waagschale 213, wenn die Drehachse 239 an der Hinterseite des Trockners 207 angebracht ist, seitlich ausfährt; würde die Schwenkachse, was alternativ ohne weiteres ebenfalls möglich ist, auf der rechten Seite des Trockners angeordnet, so könnte ein Ausfahren bzw. Ausschwenken der Waagschale 213 an der Front erfolgen, so dass auch bei dieser Ausgestaltung der Erfindung eine beidseitige Zugänglichkeit der Waagschale vorläge.

## Patentansprüche

1. Trockner mit einem Gehäuse (5,105,205), einer eingebauten Präzisionswaage (9,109,209) zur Bestimmung des Feuchtigkeitsgehaltes eines zu wägenden Gutes, einer Waagschale (13,113,213) zur Aufnahme des Wägegutes, welche mit dem Lastaufnehmer der Messzelle der Waage verbunden ist, einer über der Waagschale angeordneten Wärmequelle (11) zum Erwärmen des Wägegutes, wobei sich die Waagschale beim Trocknen innerhalb des Gehäuses befindet, und mit Mitteln zum Zugänglichmachen der Waagschale für das Beschicken und Einwägen des Wägegutes, dadurch gekennzeichnet, dass die Waagschale (13,113,213) für die Beschickung und das Einwägen des Wägegutes (23) aus dem Gehäuse (5,105,205) ausfahrbar ausgebildet ist.

2. Trockner nach Anspruch 1, dadurch gekennzeichnet, dass die Messzelle (31) zusammen mit der Waagschale (13,113,213) als gesamte Waageneinheit (9,109,209) aus dem Gehäuse (5,105,205) ausfahrbar ausgebildet ist.

3. Trockner nach Anspruch 2, dadurch gekennzeichnet, dass die Waageneinheit (9,109) von einer Parallelführung (39,139) oder von einem Schwenkmittel (239) getragen aus dem Gehäuse (5,105,205) ausfahrbar ist.

4. Trockner nach Anspruch 3, dadurch gekennzeichnet, dass die Parallelführung mindestens eine im Gehäuse (5,105) angeordnete Führungsschiene (39) aufweist, auf welcher ein die Waageneinheit (9,109) tragender Auszug (35,135,235) gelagert ist.

5. Trockner nach Anspruch 3, dadurch gekennzeichnet, dass die Parallelführung aus mindestens einer Nürnberger-Schere (139) besteht, deren hinteres Ende mit dem mit dem Gehäuse (5,105 ) verbunden und geführt ist und deren vorderes Ende die Waageneinheit (9,109) trägt.

6. Trockner nach einem der Ansprüche 1 bis 3, dadurch gekennzeichnet, dass die Waageneinheit (9,109,209) um eine vertikal stehende Welle (239) schwenkbar aus dem Gehäuse (205) ausfahrbar gelagert ist.

7. Trockner nach einem der Ansprüche 1 bis 6, dadurch gekennzeichnet, dass die Wärmequelle (11) im Gehäuse (5,105,205) über der Waagschale (13,113,213) eingesetzt und mit dem sie tragenden, als Deckel (19) ausgestalteten Gehäuseteil um eine horizontale Schwenkachse (A) am Gehäuse (5,105,205) schwenkbar gelagert ist.

8. Trockner nach einem der Ansprüche 1 bis 6, dadurch gekennzeichnet, dass die Wärmequelle (11) aus einer Halogenlampe besteht.

9. Trockner nach Anspruch 7, dadurch gekennzeichnet, dass die Halogenlampe mindestens abschnittweise ringförmig ausgebildet und der ringförmige Teil konzentrisch zur Waagschale (13) angeordnet ist.

10. Trockner nach einem der Ansprüche 1 bis 9, dadurch gekennzeichnet, dass im Gehäuse (5,105,205) über der Waagschale (13,113,213) ein Schauglas (21) für die Beobachtung des Wägegutes (23) bei eingeschobener Waagschale (13,113,213) eingesetzt ist.

11. Trockner nach einem der Ansprüche 1 bis 10, dadurch gekennzeichnet, dass zwischen der Wärmequelle (11) und der Waagschale (13, 113,213) ein Abdeckglas (12) eingesetzt ist.

12. Trockner nach Anspruch 11, dadurch gekennzeichnet, dass das Abdeckglas (12) als Schutzfilter gegen UV-Strahlen ausgebildet ist.

## Claims

1. A drier having a housing (5, 105, 205), an incorporated precision balance (9, 109, 209) for determining the moisture content of a product to be weighed, a weighing pan (13, 113, 213) for receiving the product to be weighed, which is connected to the load-carrying means of the measuring cell of the balance, a heat source (11) arranged above the weighing pan for heating the product to be weighed, wherein the weighing pan is disposed within the housing in the drying operation, and means for making the weighing pan accessible for loading and weighing in the product to be weighed, characterised in that the weighing pan (13, 113, 213) is designed to be extendable from the housing (5, 105, 205) for loading and weighing in the product (23) to be weighed.

2. A drier according to claim 1 characterised in that the measuring cell (31) together with the weighing pan (13, 113, 213) is designed to be extended as an entire balance unit (9, 109 , 209) from the housing (5, 105, 205).

3. A drier according to claim 2 characterised in that the balance unit (9, 109) is extendable from the housing (5, 105, 205), carried by a parallel guide means (39, 139) or by a pivoting means (239).

4. A drier according to claim 3 characterised in that the parallel guide means has at least one guide rail (39) which is arranged in the housing (5, 105) and on which an extension member (35, 135, 235) carrying the balance unit (9, 109) is mounted.

5. A drier according to claim 3 characterised in that the parallel guide means comprises at least one lazy tongs arrangement (139) whose rear end is connected to the housing (5, 105) and guided and whose front end carries the balance unit (9, 109).

6. A drier according to one of claims 1 to 3 characterised in that the balance unit (9, 109, 209) is mounted extendably from the housing (205), pivotably about a vertically disposed shaft (239).

7. A drier according to one of claims 1 to 6 characterised in that the heat source (11) is fitted in the housing (5, 105, 205) above the weighing pan (13, 113, 213) and with the housing portion which carries it and which is in the form of a cover (19) is mounted on the housing (5, 105, 205) pivotably about a horizontal pivot axis (A).

8. A drier according to one of claims 1 to 6 characterised in that the heat source (11) comprises a halogen lamp.

9. A drier according to claim 7 characterised in that the halogen lamp is of an annular configuration at least in a portion-wise manner and the annular part is arranged concentrically with respect to the weighing pan (13).

10. A drier according to one of claims 1 to 9 characterised in that a sight glass (21) is fitted in the housing (5, 105, 205) above the weighing pan (13, 113, 213) for viewing the product (23) to be weighed when the weighing pan (13, 113, 213) is pushed in.

11. A drier according to one of claims 1 to 10 characterised in that a cover glass (12) is fitted between the heat source (11) and the weighing pan (13, 113, 213).

12. A drier according to claim 11 characterised in that the cover glass (12) is in the form of a protective filter for UV-rays.

## Revendications

1. Séchoir comprenant un boîtier (5, 105, 205), une balance de précision intégrée (9, 109, 209) pour déterminer la teneur en humidité d'une substance à peser, un plateau de balance (13, 113, 213) destiné à recevoir la substance à peser et relié au capteur de charge de la cellule de mesure de la balance, une source de chaleur (11) disposée au-dessus du plateau de la balance et destinée à chauffer la substance à peser, le plateau de la balance se trouvant à l'intérieur du boîtier lors du séchage, et comprenant des moyens pour accéder au plateau de la balance afin de charger et de doser la substance à peser, caractérisé en ce que le plateau (13, 113, 213) de la balance peut être sorti du boîtier (5, 105, 205) pour charger et doser la substance à peser (23).

2. Séchoir selon la revendication 1, caractérisé en ce que la cellule de mesure (31) peut, conjointement avec le plateau de balance (13, 113, 213), sortir du boîtier (5, 105, 205) sous la forme d'une unité globale de pesage (9, 109, 209).

3. Séchoir selon la revendication 2, caractérisé en ce que l'unité de pesage (9, 109) peut sortir du boîtier (5, 105, 205) en étant portée par un moyen de guidage parallèle (39, 139) ou par un moyen de pivotement (239).

4. Séchoir selon la revendication 3, caractérisé en ce que le moyen de guidage parallèle comporte au moins un rail de guidage (39) qui est disposé dans le boîtier (5, 105) et sur lequel est monté un module extractible (35, 135, 235) portant l'unité de pesage (9, 109).

5. Séchoir selon la revendication 3, caractérisé en ce que le moyen de guidage parallèle est constitué d'au moins une pince extensible (139) dont l'extrémité arrière est reliée au boîtier (5, 105) et dont l'extrémité avant porte l'unité de pesage (9, 109).

6. Séchoir selon l'une des revendications 1 à 3, caractérisé en ce que l'unité de pesage (9, 109, 209) est montée de façon à pouvoir sortir du boîtier (205), en pivotement autour d'un axe vertical (239).

7. Séchoir selon l'une des revendications 1 à 6, caractérisé en ce que la source de chaleur (11) est disposée dans le boîtier (5, 105, 205) au-dessus du plateau de balance (13, 113, 213) et, avec la partie de boîtier qui la porte et présente la forme d'un couvercle (19), est montée pivotante sur le boîtier (5, 105, 205) autour d'un axe de pivotement horizontal (A).

8. Séchoir selon l'une des revendications 1 à 6, caractérisé en ce que la source de chaleur (11) est constituée par une lampe à halogène.

9. Séchoir selon la revendication 7, caractérisé en ce que la lampe à halogène présente au moins la forme de segments annulaires et la partie annulaire est concentrique au plateau de balance (13).

10. Séchoir selon l'une des revendications 1 à 9, caractérisé en ce que, dans le boîtier (5, 105, 205) est disposé, au-dessus du plateau de balance (13, 113, 213), un hublot (21) pour observer la substance à peser (23) lorsque le plateau de balance (13, 113, 213) est rentré.

11. Séchoir selon l'une des revendications 1 à 10, caractérisé en ce que, entre la source de chaleur (11) et le plateau de balance (13, 113, 213), est placé un écran en verre (12).

12. Séchoir selon la revendication 11, caractérisé en ce que l'écran en verre (12) est conçu sous la forme d'un filtre de protection contre les rayons UV.
